# EUROPEAN PATENT SPECIFICATION

(11) **EP 1 914 205 B1**
(45) Date of publication and mention of the grant of the patent: **12.01.2011**
(21) Application number: 07019243.0
(22) Date of filing: 01.10.2007
(51) Int. Cl.: C02F 3/30, C02F 11/04, C02F 103/20

(54) **Method for the fermentation of high calorific and nutrient rich substances**
Fermentationsverfahren für hochkalorische und nährstoffreiche Produkte
Procédé de fermatations pour des substances à pouvoir calorifique élevé et nutrives

(30) Priority: 17.10.2006 BE 200600512
(43) Date of publication of application: 23.04.2008
(73) Proprietor: Trevi, Naamloze Vennootschap, 9050 Gentbrugge (BE); Biogastec, naamloze vennootschap, 9050 Gentbrugge (BE)
(72) Inventor: Deboosere, Stefaan Fernand André, 9000 Gent (BE)
(74) Representative: Donné, Eddy

(56) References cited:
- EP-A- 0 426 933
- EP-A2- 0 846 664
- WO-A-2005/042408
- BE-A3- 1 014 295
- DE-A1- 3 808 834
- DE-A1- 10 301 858
- NL-A- 8 902 573
- US-A- 4 915 841
- US-A- 5 514 278
- US-A- 5 846 424
- US-A1- 2005 252 855
- US-A1- 2006 060 525
- T. FEYAERTS ET AL: "Beste Beschikbare Technieken (BBT) voor mestverwerking" October 2002 (2002-10), VITO , VLAANDEREN (BE) , XP002431781 zie vooral hoofdstukken 2.5, 2.5.3, 2.6 en 2.6.3 * page 318 - page 329 *

## Description

### FIELD OF THE INVENTION

The present invention concerns a method for fermenting nitrogen and/or phosphorus containing organic substances, whereby the performance and controllability of the fermentation process is strongly increased on the one hand, thanks to a specific operation, and the nutrients with nitrogen and/or phosphorus are removed from the substances to be fermented to a high degree on the other hand.

### STATE OF THE ART

Fermentation of organic material is increasingly regarded as the ultimate way to obtain the required amount of green energy production, among others in order to reduce the emission of CO₂ that is produced when using fossil energy sources.

However, fermentation only transforms organic material (carbon) into biogas, whereas nutrients such as nitrogen and phosphor are not removed. More specifically as far as nitrogen is concerned, only a partial transformation of organic nitrogen into ammoniacal nitrogen is obtained during the fermentation, but the total nitrogen content remains unaltered.

In other words, in case of a conventional fermentation of these substances, a digestate is created in which all the nutrients such as nitrogen and/or phosphorus of the fermented matter (energy crops, animal manure,...) are still present, so that one usually chooses to remove the nutrients from the digestate via subsequently applied techniques so as to meet the prevailing emission standards or to meet the imposed necessity to remove nutrients.

Moreover, in practice it is found that in case of the above-described conventional manner of fermenting nitrogen and/or phosphorus containing organic substances, the presence of high concentrations of nitrogen, i.e. ammoniacal nitrogen (NH₄-N), may lead to a considerable inhibition of the fermentation process, which makes it necessary among others to build large fermentation reactors and/or to maintain long lingering periods.

This makes the fermentation of for example animal manure little interesting. Various authors report about an inhibition when fermenting as of 2 to 4 g/l NH₄-N, depending among others of the acid content (pH) and temperature in the fermentation reactor. In animal manure are usually measured higher concentrations of ammonium, such that, in practice, when fermenting animal manure, there will usually be a partial ammonia inhibition.

Moreover, the fermentation of nitrogen and/or phosphorus containing organic substances , such as animal manure, results in a relatively low yield of biogas, partly because, as large plants must be built, a considerable part of the energy that is released during the fermentation will have to be used to maintain the temperature of the fermentation reactor.

As far as the processing of the obtained digestate is concerned, the digestate is put directly, i.e. untreated, in the fields in most concepts. In some cases, the digestate is separated into a solid and a liquid fraction, for example by means of a jack press or a centrifuge. The resulting solid fraction is dried or composted. For the possible processing of the obtained liquid fraction of the digestate, a combination of various concentration techniques, such as membrane filtering and evaporation is usually applied.

However, at the very best, these purification techniques only provide for a concentration of the remaining nutrients (predominantly nitrogen), whereby the further processing of the thus obtained concentrates is usually not very simple.

Moreover, it should be mentioned that techniques such as membrane filtering and evaporation, because of their energy-consuming character, clearly decrease the net production of energy of the fermentation plant.

From what precedes follows that, with the present fermentation concepts for nitrogen and/or phosphorus containing organic substances , reduced net energy yields are obtained, among others due to the ammonia inhibition, while the processing of the obtained digestate also becomes very difficult and is very costly.

EP 0.426.933 describes the purification of leachate waste water by fermentation and biological purification as operation steps. The biological purification comprises nitrification and denitrification and the overflow of the biological purification is sent to the fermentation or anaerobic reactor, but contains only excess biological sludge.

US 2006/060525 and WO 2005/042408 describe systems for treating particle bearing liquid, animal waste and wastewater. The systems comprise sedimentation by gravity, followed by the fermentation of the sedimented lower part of the materials, and the biological purification of the upper liquid part of the materials. No mechanical separation is performed. From the biological purification only sludge is returned to the fermentor.

### SUMMARY OF THE INVENTION

The present invention aims to remedy the above-mentioned and other disadvantages.

To this end, the invention concerns a method for fermenting nitrogen and/or phosphorus containing organic substances, whereby at least a part of the substances is separated into a liquid and a solid fraction using a centrifuge, after which the liquid fraction is biologically purified before the excess biological sludge and at least part of the biologically purified liquid fraction is fermented, together with the solid fraction of the centrifuged substances and together with the non-centrifuged substances.

This method comprises at least one operational step for separating the substances by centrifugation, one operational step for fermenting at least a part of the substances, as well as a step for the biological purification of at least a part of the substances by means of nitrification and denitrification, whereby a purified liquid and sludge are formed during the biological purification, and whereby the sludge and at least a part of the purified liquid is added to the part of the substances that are fermented.

The biological purification plant consists of an aerobic nitrification basin in which the available nitrogen is first ammonified and is subsequently nitrified in two steps by Nitrosomonas and Nitrobacter species in the presence of oxygen, and a denitrification basin connected to the latter in which, by various heterotrophic micro-organisms in the absence of oxygen and in the presence of an adequate carbon source, the nitrite and nitrate nitrogen are transformed into harmless nitrogen gas.

Adding a part of the biologically purified liquid to the materials to be fermented is actually the core of the suggested concept, since it makes sure that the fermentation process is much better controllable and is optimised.

First of all (1) there is the possibility to pre-heat the material to be fermented and thus to get it at a required temperature. Indeed, the biological decomposition of nitrogen and organic material in a biological purification plant results in an obvious release of residual heat. For, during the biological decomposition of COD, ± 14 MJ/kg COD is released, whereas during the biological decomposition of nitrogen ± 25 MJ/kg N is released.

Apart from that, (2) explicit reference is made to the possibility to reduce the ammoniacal nitrogen content in the fermentation tank and to thus avoid inhibition by ammonia toxicity in the fermentation tank by making the biologically purified liquid and the sludge recirculate. When fermenting nitrogen and phosphorus containing organic substances in the conventional way, this is a crucial problem.

Further (3) reference is made to the possibility of adjusting the concentration of dry matter (DM) in the fermentation tank, as a function of the applied fermentation concept.

There is (4) also the possibility to correct the pH in the fermentation tank since, by controlling the nitrification and denitrification process, the pH of the obtained biologically purified liquid can be adjusted, such that when this liquid is made to circulate back to the fermentation tank, also the pH in the fermentation tank can be adjusted.

(5) Finally, the suggested concept offers the possibility, among others when the concentrations of volatile fatty acids are too high, to reduce any possible inhibition by sending back purified effluent and thus reducing the concentration of volatile fatty acids.

In a biological purification plant, elimination yields of 90% or more of the total amount of nitrogen can be obtained, and under optimal nitrification circumstances even an almost total (> 99%) elimination of the ammoniacal nitrogen. By adding the effluent of the biological purification to the substances to be fermented, the fermentation process will be much smoother, with smaller fermentation tanks and/or shorter lingering periods in the fermentation tank being required, which thus results in a more economical operation.

The nitrogen and/or phosphorus containing organic substances are partly or entirely separated into a solid fraction and a liquid fraction, prior to the fermentation, preferably by means of a centrifuge. When these substances (e.g. animal manure) are centrifuged, the major part of the nitrogen (typically 60 to 70%) will be gathered in the liquid fraction, while the major part of the phosphor (typically 70 tot 80%) is concentrated in the solid fraction.

While the solid fraction goes to the fermentation unit, the liquid fraction that is full of nitrogen is treated directly in the biological purification plant.

Since the liquid fraction has not been fermented beforehand, there will be sufficient carbon (COD) for an optimal denitrification step.

A part of the biologically purified liquid is subsequently added to the solid fraction and the other substances to be fermented , so as to optimize the fermentation process.

Following the fermentation, the digestate is preferably separated into a solid and a liquid fraction. The solid fraction, which comprises the major part of the phosphor, is preferably discharged to be processed externally, but it can also be carried back to the fermentation unit. The liquid fraction of the digestate is treated in the biological purification plant together with the non-fermented liquid fraction.

Apart from the fact that a biological purification results in a far-going elimination of nitrogen, use is additionally made in this manner of the remaining energy content of the digestate and the non-fermented liquid fraction.

During the biological purification of heavily loaded waste water flows, such as digestate and liquid fraction of animal manure, water temperatures of 35°C to 40°C are obtained as a result of the metabolic activity in the biological reactor, whereby the biological sludge will necessarily have to be cooled in some cases so as not to overheat the active micro-organisms.

It is clear that when biologically purifying waste water with a light organic load, such as waste water of domestic or industrial origin, the metabolic activity in the biological reactor will not suffice to obtain such water temperatures. For that reason, it is clear that the present invention does not include the fermentation of substances occurring in concentrations such as those that are found in such lightly loaded waste water flows.

According to the present method, said heat production is advantageously used during the biological purification process, in three different ways.
(1) By optimising the embodiment of the plant, one can provide for a thermal conditioning of the fermentation plant on the one hand, in particular by building the biological purification plant as an envelope around the fermentation tank. As a preferred embodiment of the latter concept, one could think of two concentric tanks, whereby the inner tank forms the fermentation tank and the outer tank forms the biological purification plant, which thus insulates the fermentation tank and maintains it at the required temperature.
(2) Apart from that, said residual heat can be used to pre-heat the material to be fermented, by making it recirculate and by mixing a part of the biologically purified liquid to the materials to be fermented again.
(3) Finally, this heat production results in a partial evaporation of the liquid at the surface of the biological purification plant, such that the amount of residual liquid to be discharged is restricted.

It should be noted that, in the common fermentation concepts, part of the heat that is released when valorising the biogas must be used to heat the fermentation tank and/or the material to be fermented, while according to the present concept, this is done by means of the heat that is released during the biological purification of at least a part of the digestate and the non-fermented liquid fraction.

Separating and biologically purifying the liquid fraction from nitrogen and/or phosphorus containing organic substances, prior to the fermentation process, is in theory disadvantageous in that a part of the organic material is no longer available for the production of methane in the fermentation tank.

As mentioned above, the heat that is released during the biological purification process is subsequently advantageously used, however, such that there are no losses. On the contrary, with this method according to the invention, fermenting only animal manure becomes really interesting. Apart from that it should be noted that nitrogen elimination via denitrification is only possible when there is enough carbon.

A major additional advantage of the biological purification of the digestate is that this liquid becomes odourless, as opposed to the untreated digestate or the unpurified liquid manure. Hence, distributing the excess of liquid (either or not after it has been concentrated) in the fields will not produce any annoying smell.

In a first extension of the described method, the nitrification basin as well as the denitrification basin of the biological purification plant are provided with a compartment in which the liquid may settle. The settlement of the liquid from the denitrification basin produces a lower liquid (sludge) that is poor of nitrate and that also contains a major part of the residual phosphor, due to the concentration, that was not separated in the preceding centrifugation step. By preferentially using said lower liquid as a recirculation liquid towards the fermentation tank, the (1) excess of biological sludge will be carried along to the fermentation tank and will be fermented, resulting in an increased biogas production, (2) the residual phosphor will be carried back to the fermentation tank, after which it will be concentrated with the solid fraction following the subsequent centrifugation of the digestate and (3) liquid that is poor of nitrate will be carried back to the fermentation tank, as a result of which the fermentation is no longer disadvantageously influenced by any possible denitrification (i.e. consumption of organic material without any production of biogas) in the fermentation tank. In the settling compartment of the nitrification basin, however, the upper liquid will be practically free of ammoniacal nitrogen and it will also have a low concentration of phosphor. This upper liquid is preferentially used then to be distributed in the fields or to be further concentrated, because of the reduced nutrient content and the reduced possible smell (among others because of the absence of ammonia) when it is being distributed or further processed.

In a second extension of the described method, a far-going reduction in volume of the biologically purified liquid is obtained, thanks to an efficient use of the residual heat (cooling water, flue gases) that is produced when valorising the biogas from the fermentation tank. Via heat exchangers, a part of the biologically purified liquid is heated (e.g. up to a temperature of more than 50°C), which results in a forced evaporation and thus concentration of the liquid. Since practically all the ammoniacal nitrogen has been removed from the biologically purified liquid, and also all organic acids and other possibly smelly compounds have been decomposed, the biologically purified liquid may be evaporated without any smell treatment systems or chemicals being added.

Concentration by evaporation of the biologically purified liquid results in strongly reduced transport costs to remove the residual liquid fraction. Thus, the present invention also aims to limit the volumes of liquid to be removed by obtaining a further concentration of the biologically purified liquid by making efficient use of the residual heat that is produced when the biogas energy is being valorised.

The presence of such a heated, biologically purified liquid moreover offers additional advantages as far as temperature control of the material to be fermented is concerned, by offering the possibility to make the biologically purified liquid recirculate as of the biological purification unit and/or as of the heated connected evaporator.

In a third extension of the described method, concentrated liquid fraction, either or not concentrated by means of evaporation, is further concentrated via an evaporating plant, for example of the multi-stage type.

Since all substances that can be evaporated (ammonium, organic acids,...) have been eliminated in the biological purification process, evaporating down the concentrated and biologically purified liquid fraction will result in a pure and dischargeable condensate. The concentrate of the evaporating plant can be added to the solid fraction of the digestate so as to be externally processed or it can be carried back to the fermentation tank.

It should be noted that, when evaporating down the biologically purified liquid (as opposed to evaporating down digestate) no chemicals (acids, bases) must be used to avoid that ammonia or volatile fatty acids gather in the condensate.

In a fourth extension of the described method, flue gases that are produced when burning biogas are purified in the biological purification plant or in the connected evaporator. This treatment mainly consists in bringing flue gases in close contact with the liquid (for example via bubbling through), after which the components present (CO₂, SO₂, N0ₓ, ...) are kept in the liquid phase and/or are biologically decomposed.

In a fifth extension of the described method, part of the residual heat that is produced when valorising the biogas from the fermentation tank is efficiently used to dry in the separated solid fraction of the digestate. This can be done by means of a condensation dryer, whereby the separated condensate is then treated in the biological purification plant.

The present invention also concerns a device for fermenting nitrogen and/or phosphorus containing organic substances, which device consists of a device for mechanical separation, a unit for a biological purification plant and a fermentation tank, whereby the biological purification plant has at least one nitrification basin and one denitrification basin, and whereby the device is provided with means to make an amount of biologically purified liquid and sludge recirculate to the fermentation tank.

In order to better explain the characteristics of the invention, the following preferred embodiment of a method and device for fermenting nitrogen and/or phosphorus containing substances are described as an example only without being limitative in any way, with reference to the accompanying drawings, in which:

### SUMMARY OF THE FIGURES

figure 1 is a block diagram of a device according to the invention;
figure 2 represents a variant of figure 1 with the mass balance and the concentration of different components mentioned in between brackets;
figure 3 schematically represents a preferred embodiment of a part of the device according to the invention.

### DESCRIPTION OF A PREFERRED EMBODIMENT

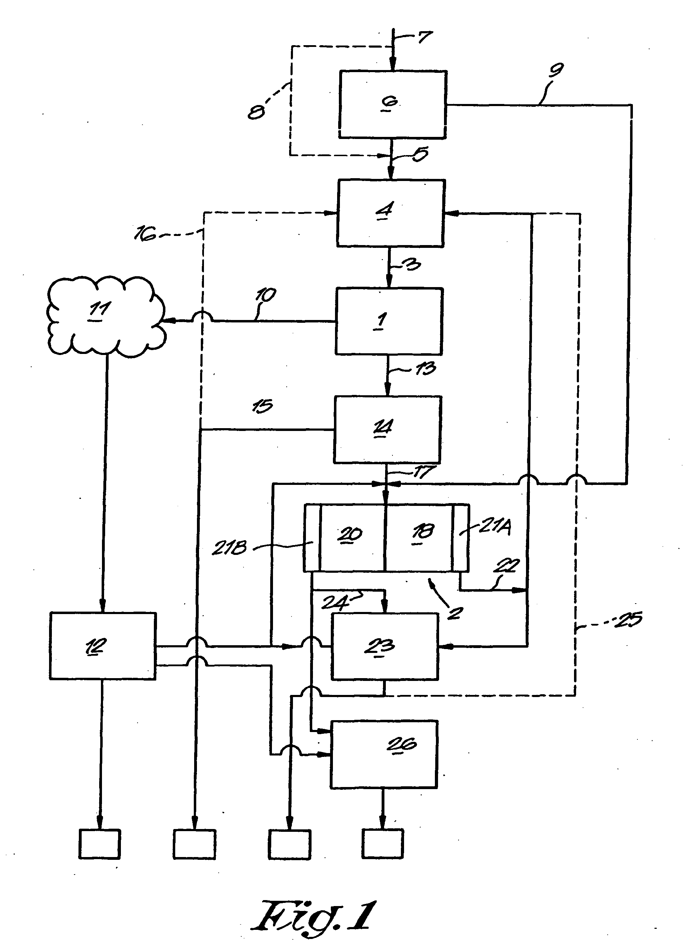

As is schematically represented in figure 1, the device comprises a fermentation tank 1 and a biological purification plant 2.

The fermentation tank 1 is provided with a feed line 3, in this case a mixing device 4 with an inlet 5 that is connected to a solid fraction outlet of a separating device 6. This separating device 6, which is preferably a centrifuge, comprises an inlet 7 onto which is connected an auxiliary line 8 that bridges the separating device 6 and an outlet line 9 for the liquid fraction that opens in the biological purification plant 2.

The fermentation tank 1 in this case comprises an outlet line 10 for biogas 11 that is preferably supplied to a biogas motor 12 to generate electricity.

The fermentation tank 1 is further provided with a discharge line 13 for digestate, which discharge line 13 opens into a separating device 14.

The separating device 14 for digestate is preferably a centrifuge with a discharge line 15 for the solid fraction, onto which is connected an auxiliary line 16 that opens in the above-mentioned mixing device 4 upstream of the fermentation tank 1.

The separating device 14 also comprises an outlet line 17 for the liquid fraction that is connected to a denitrification basin 18 of the biological purification plant 2. It should be noted that the separating devices 6 and 14 can be integrated into one another.

In the above-mentioned denitrification basin 18, the outlet line 9 for the liquid fraction of the separating device 6 opens as well, upstream of the fermentation tank 1.

Apart from the above-mentioned denitrification basin 18, the biological purification plant 2 also comprises a nitrification basin 20, and both basins 18 and 20 are preferably each provided with their own settling compartment 21A and 21B.

The settling compartment 21A of the denitrification basin 18 is provided with a discharge line 22 near its bottom which preferably splits up in a first branch that flows back to the above-mentioned mixing device 4 and a second branch that opens into an evaporator 23 in which an outlet line 24 of the settling compartment 21B of the nitrification basin 20 opens as well.

If necessary, the evaporator 23 can be provided with an outlet line 25 for liquid that opens in the above-mentioned mixing device 4.

As an alternative for the evaporator 23, an evaporating plant 26 may possibly be provided.

It is clear that in the above-mentioned lines, pump devices and valves or other discharge regulators can be provided, such that the supply and discharge of material to the different devices and installations can be controlled.

The working of the device 1 is simple and as follows.

Nitrogen and/or phosphorus containing organic Substances are supplied to the separating device 6, where they are separated into a liquid fraction that is discharged to the biological purification plant and into a solid fraction that is pumped to the mixing device.

The liquid fraction is then treated in a biological purification plant 2 together with the digestate from the fermentation tank 1. A part of the biologically purified liquid is processed in the evaporator 23, while the residual part is fed back to the mixing device 4 before it goes to the fermentation tank 1.

In the evaporator 23, the residual heat that is produced when the biogas 11 is valorised is used to heat the liquid to over 50°C, as a result of which a far-going evaporation and thus concentration is obtained. The liquid from this evaporator 23 is partly used as a recirculation liquid, while the residual amount of liquid can be distributed in farmlands or can be further concentrated in the evaporating plant 26.

According to the invention, the solid fraction from the separating device 6, upstream of the fermentation tank 1, is mixed with the recirculation liquid.

Depending among others on the required fermentation temperature, said recirculation liquid is taken from the biological purification plant 2 (temperature 35 to 40°C) and/or from the evaporator 23 (temperature over 50°C).

The operation of the biological purification and the recirculation flow to the fermentation tank 1 is selected such that optimal circumstances are obtained in the fermentation tank 1 as far as among others pH, temperature, concentration of dry matter and concentration of ammoniacal nitrogen and volatile fatty acids are concerned.

In the fermentation tank 1, the organic material is transformed into biogas 11 by means of anaerobic micro-organisms. By means of the biogas motor 12, the biogas is transformed into electricity, usually after a preceding desulphurization. The residual heat that is produced hereby is efficiently used in the evaporator 23, as mentioned above.

The digestate from the fermentation tank 1 is subsequently separated into a solid fraction and a liquid fraction.

The separating device 14 in which this is carried out is preferably a centrifuge. The solid fraction is partly carried back to the fermentation tank 1 and partly conveyed to a certified processor, for example for further composting or drying. In case one chooses to dry a part of the digestate, a condensation dryer is hereby preferably applied, whereby external heat is used for the drying, coming from the cooling and/or flue gases of the biogas motor 12.

The liquid fraction is processed in the biological purification plant 2, together with the liquid fraction of the mechanically separated nitrogen and/or phosphorus containing organic substances.

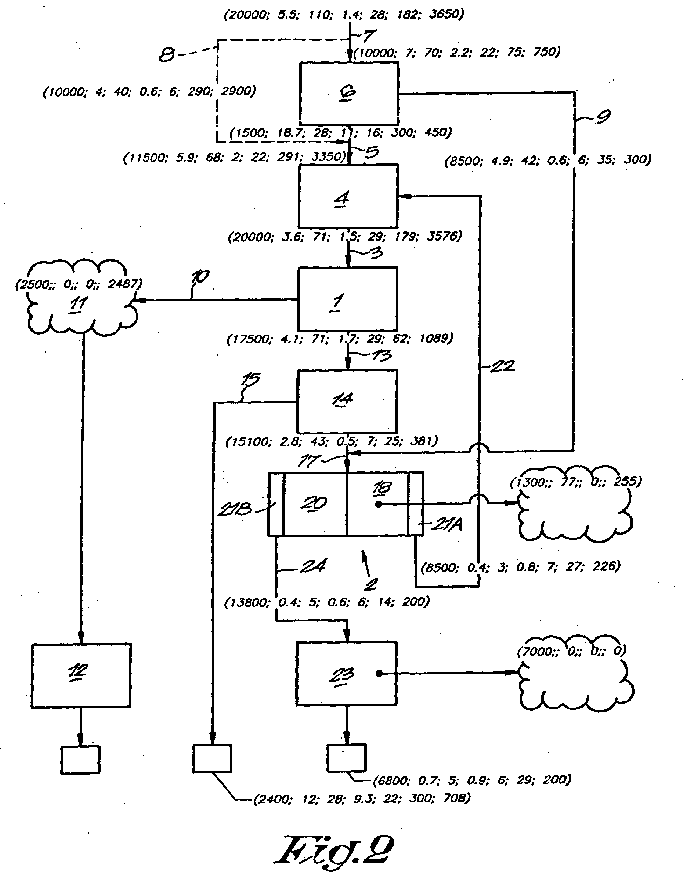

As an illustration, with reference to figure 2, a detailed example of the processing of nitrogen and/or phosphorus containing organic substances with a method according to the invention is hereafter described in detail, whereby a load of 10,000 ton of pig manure / year and 10,000 ton of maize / year is taken as a basis.

Figure 2 represents for each operational step the mass balance, the nitrogen balance, the phosphor balance and the dry matter balance. The values represented in between brackets are respectively: (mass (ton/year); nitrogen concentration (kg N/ton); mass nitrogen (ton N/year); phosphor concentration (kg P/ton); mass phosphor (ton P/year); concentration of dry matter (kg DS/ton); mass of dry matter (ton DS/year).

Whereas the maize is sent directly to the mixing device 4, the pig manure is first separated in the centrifuge 6.

By means of centrifugation of pig manure as well as of the digestate from the fermentation tank 1, a separation of 15% to the thick fraction is obtained for the mass, of 65% for the dry matter, of 75% for the phosphor and of 40% for the nitrogen. The biological purification via nitrification and denitrification has an N-removal yield of 90%, whereby the residual nitrogen is entirely formed of nitrate nitrogen and organic nitrogen (practically no ammoniacal nitrogen).

The concentration of nitrogen in the fermentation tank 1 amounts to 4.1 kg/ton, which is only partly formed of ammoniacal nitrogen however. It should be noted that, without a preceding separation of the manure, the N-concentration in the fermentation tank, whereby ammoniacal nitrogen also represents a larger portion, would amount to 6.3 kg/ton.

The estimated evaporation over the biological purification amounts to 4 m³ per m² and per year, with a liquid temperature of 37°C in the biology. The amount of heat that is produced when the biogas is valorised and that is used in the evaporator 23, is calculated on the basis of a biogas production of 185 m³/ton of maize and 10 m³/ton of manure, an amount of methane in the biogas of some 55 to 60% and some 50% of heat that is released when biogas is transformed into electricity. The heat for the fermentation tank is in this case entirely supplied by the aerobic biological purification.

The figure with the mass balance makes clear that, starting from an input of 20,000 ton/year of nitrogen and/or phosphorus containing organic substances , an output of 9,200 ton/year of end products (solid fraction and concentrate) is obtained. The rest of the material disappears after evaporation over the biological purification and in the evaporator 23, and via the transformation into biogas.

The figure with the nitrogen balance makes clear that 70% of the input of nitrogen in the biological purification unit is transformed into molecular nitrogen gas. This is more than the amount of nitrogen that was present in the untreated pig manure. The figure with the phosphor balance indicates that, as expected, all the input is found again in the output (solid fraction and concentrate).

What is important regarding the nutrient balances is that ± 85% of the nitrogen output and ± 79% of the phosphor output is found in a restricted amount of solid fraction (± 12% of the original mass input), so that it is clear that the remaining nutrients have been concentrated.

Finally, on the basis of the dry matter (DM) balance, it is found that 68% of the DM supply into the fermentation tank is transformed. This represents almost the entire DM content of the ingoing maize.

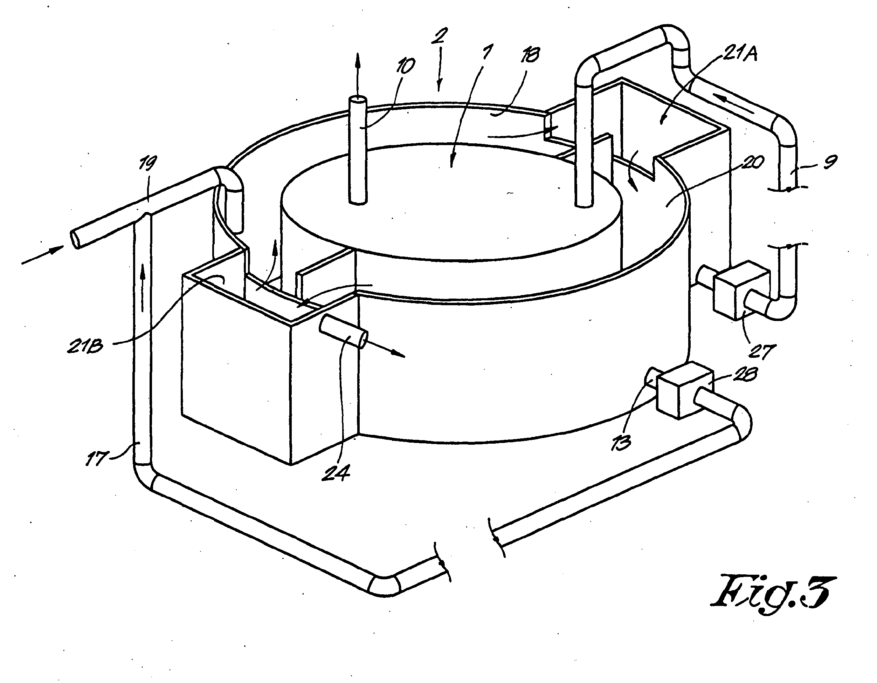

Figure 3 represents a part of a preferred device according to the invention. This part mainly comprises the fermentation tank 1 and the biological purification plant 2 that is built around the fermentation tank 1, such that they both have one side wall in common or are connected to each other with their respective side walls.

This construction of the device is advantageous in that the fermentation tank is well insulated against heat losses and in that, in order to keep the fermentation going, the heat that is released from the biological purification can be used.

In the lines between the fermentation tank 1 and the biological purification plant 2 are schematically represented pumps 27 and 28. For simplicity's sake, the mixing device 4 and the separating device 14 between the fermentation tank 1 and the installation 2 are not represented in the figures.

The present invention is by no means restricted to the above-described embodiments represented in the accompanying drawings; on the contrary, such a method and device according to the invention can be made in all sorts of variants while still remaining within the scope of the claimed invention.

## Claims

1. Method for fermenting nitrogen and/or phosphorus containing organic substances, **characterised in that** at least a part of the substances is separated into a liquid and a solid fraction using a centrifuge after which the liquid fraction is biologically purified by means of nitrification and denitrification, whereby during the biological purification, a biologically purified liquid and sludge are formed, and whereby at least a part of the purified liquid is fermented together with the solid fraction of the centrifuged substances and together with the non-centrifuged substances.

2. Method according to claim 1, **characterised in that** the above-mentioned biologically purified liquid and the sludge are extracted from the biological purification as of a settling compartment (21A-21B).

3. Method according to claim 1, **characterised in that** the biologically purified liquid and the sludge that are led to the fermentation unit have a temperature over 35°C.

4. Method according to claim 1, **characterised in that** a digestate is formed during the fermentation, of which at least a part is subjected to the operational step of biological purification.

5. Method according to claim 4, **characterised in that** at least a part of the digestate is separated into a liquid fraction and a solid fraction, after which the liquid fraction is subjected to the operational step of biological purification.

6. Method according to claim 5, **characterised in that** the solid fraction is dried by means of condensation drying, whereby external heat is used for the drying, coming from the cooling and/or flue gases of a motor (12) that is driven with biogas created during the fermentation.

7. Method according to claim 1, **characterised in that** the biologically purified liquid is concentrated by means of evaporation.

8. Method according to claim 1 or 7, **characterised in that** the biologically purified liquid is concentrated by evaporating it down.

9. Method according to claim 8, **characterised in that** a part of the non-evaporated liquid is led from the evaporator (23) to the fermentation tank (1).

10. Method according to any one of the preceding claims, **characterised in that** biogas which is formed during the fermentation is used to generate energy.

11. Method according to claim 10 and 1, 7 or 8, **characterised in that** when the biogas is burnt, flue gases are formed, and **in that** these flue gases are put into contact with the biologically purified liquid or with the above-mentioned concentrated biologically purified liquid.

## Patentansprüche

1. Verfahren zum Fermentieren stickstoff- und/oder phosphorhaltiger organischer Substanzen, **dadurch gekennzeichnet, dass** mindestens ein Teil der Substanzen unter Verwendung einer Zentrifuge in eine flüssige und eine feste Fraktion aufgeteilt wird, wonach die flüssige Fraktion mittels Nitrifikation und Denitrifikation biologisch gereinigt wird, wobei während der biologischen Reinigung eine biologisch gereinigte Flüssigkeit und Schlick gebildet werden, und wobei mindestens ein Teil der gereinigten Flüssigkeit zusammen mit der festen Fraktion der zentrifugierten Substanzen und zusammen mit den nicht zentrifugierten Substanzen fermentiert wird.

2. Verfahren nach Anspruch 1, **dadurch gekennzeichnet, dass** die vorgenannte biologisch gereinigte Flüssigkeit und der Schlick aus einem Absinkraum (21A-21B) heraus der biologischen Reinigung entzogen werden.

3. Verfahren nach Anspruch 1, **dadurch gekennzeichnet, dass** die biologisch gereinigte Flüssigkeit und der Schlick, die zu der Fermentationseinheit geleitet werden, eine Temperatur über 35°C aufweisen.

4. Verfahren nach Anspruch 1, **dadurch gekennzeichnet, dass** während der Fermentation ein Gärrest gebildet wird, wovon mindestens ein Teil dem Arbeitsschritt der biologischen Reinigung unterzogen wird.

5. Verfahren nach Anspruch 4, **dadurch gekennzeichnet, dass** mindestens ein Teil des Gärrests in eine flüssige Fraktion und eine feste Fraktion aufgeteilt wird, wonach die flüssige Fraktion dem Arbeitsschritt der biologischen Reinigung unterzogen wird.

6. Verfahren nach Anspruch 5, **dadurch gekennzeichnet, dass** die feste Fraktion mittels Kondensationstrocknung getrocknet wird, wobei externe Wärme für das Trocknen verwendet wird, die von der Kühlung und/oder den Rauchgasen eines Motors (12) stammen, der mit während der Fermentation erzeugtem Biogas angetrieben wird.

7. Verfahren nach Anspruch 1, **dadurch gekennzeichnet, dass** die biologisch gereinigte Flüssigkeit mittels Verdampfen konzentriert wird.

8. Verfahren nach Anspruch 1 oder 7, **dadurch gekennzeichnet, dass** die biologisch gereinigte Flüssigkeit durch Eindampfen konzentriert wird.

9. Verfahren nach Anspruch 8, **dadurch gekennzeichnet, dass** ein Teil der nicht verdampften Flüssigkeit aus dem Verdampfer (23) zu dem Fermentationstank (1) geleitet wird.

10. Verfahren nach einem der vorgenannten Ansprüche, **dadurch gekennzeichnet, dass** während der Fermentation gebildetes Biogas zur Erzeugung von Energie verwendet wird.

11. Verfahren nach Anspruch 10 und 1, 7 oder 8, **dadurch gekennzeichnet, dass**, wenn das Biogas verbrannt wird, Rauchgase gebildet werden, und dadurch, dass diese Rauchgase mit der biologisch gereinigten Flüssigkeit oder mit der vorgenannten konzentrierten biologisch gereinigten Flüssigkeit in Kontakt gebracht werden.

## Revendications

1. Procédé pour la fermentation de substances organiques contenant de l'azote et/ou du phosphore, **caractérisé en ce qu'**on sépare au moins une partie des substances en une fraction liquide et en une fraction solide en utilisant une centrifugeuse ; après quoi, on soumet la fraction liquide à une purification biologique à l'aide d'une nitrification et d'une dénitrification ; procédé par lequel, au cours de la purification biologique, on obtient un liquide soumis à une purification biologique et une boue et on soumet au moins une partie du liquide purifié à une fermentation conjointement avec la fraction solide des substances centrifugées et conjointement avec les substances non centrifugées.

2. Procédé selon la revendication 1, **caractérisé en ce qu'**on extrait le liquide soumis à une purification biologique et la boue que l'on a mentionnés ci-dessus à partir de la purification biologique par exemple dans un compartiment de précipitation (21A-21B).

3. Procédé selon la revendication 1, **caractérisé en ce que** le liquide soumis à une purification biologique et la boue que l'on guide vers l'unité de fermentation possèdent une température supérieure à 35°C.

4. Procédé selon la revendication 1, **caractérisé en ce qu'**on obtient un produit de digestion au cours de la fermentation dont on soumet au moins une partie à l'étape opératoire de purification biologique.

5. Procédé selon la revendication 4, **caractérisé en ce qu'**on sépare au moins une partie du produit de digestion en une fraction liquide et en une fraction solide ; après quoi on soumet la fraction liquide à l'étape opératoire de purification biologique.

6. Procédé selon la revendication 5, **caractérisé en ce qu'**on sèche la fraction solide via un séchage par condensation, de la chaleur externe étant utilisée pour le séchage, en provenance des gaz de refroidissement et/ou de carneau d'un moteur (12) qui est entraîné avec du biogaz créé au cours de a fermentation.

7. Procédé selon la revendication 1, **caractérisé en ce qu'**on concentre le liquide soumis à une purification biologique au moyen d'une évaporation.

8. Procédé selon la revendication 1 ou 7, **caractérisé en ce que** le liquide soumis à une purification biologique est concentré en le soumettant à une évaporation.

9. Procédé selon la revendication 8, **caractérisé en ce qu'**on guide une partie du liquide non évaporé depuis l'évaporateur (23) jusqu'au réservoir de fermentation (1).

10. Procédé selon l'une quelconque des revendications précédentes, **caractérisé en ce qu'**on utilise du biogaz qui se forme au cours de la fermentation pour générer de l'énergie.

11. Procédé selon les revendications 10 et 1, 7 ou 8, **caractérisé en ce que**, lorsque le biogaz est brûlé, on obtient des gaz de carneau, et **en ce qu'**on met ces gaz de carneau en contact avec le liquide soumis à une purification biologique ou avec le liquide concentré, soumis à une purification biologique, que l'on a mentionné ci-dessus.
